(19) Europäisches Patentamt / European Patent Office / Office européen des brevets

(11) **EP 4 263 311 B1**

(12) **FASCICULE DE BREVET EUROPEEN**

(45) Date de publication et mention de la délivrance du brevet:
**03.12.2025  Bulletin 2025/49**

(21) Numéro de dépôt: **21840599.1**

(22) Date de dépôt: **17.12.2021**

(51) Classification Internationale des Brevets (IPC):
**B60W 50/06** (2006.01)    **B60W 60/00** (2020.01)
**B60W 10/20** (2006.01)

(52) Classification Coopérative des Brevets (CPC):
**B60W 50/06; B60W 10/20; B60W 60/0013;**
B60W 2552/50; B60W 2552/53; B60W 2710/20;
B60W 2720/14

(86) Numéro de dépôt international:
**PCT/EP2021/086572**

(87) Numéro de publication internationale:
**WO 2022/129564 (23.06.2022 Gazette 2022/25)**

(54) **MÉTHODE DE CONTRÔLE POUR CONTRÔLER LE DÉPLACEMENT D'UN VÉHICULE AUTOMOBILE AUTONOME**

STEUERUNGSVERFAHREN ZUR STEUERUNG DER BEWEGUNG EINES AUTONOMEN KRAFTFAHRZEUGS

CONTROL METHOD FOR CONTROLLING THE MOVEMENT OF AN AUTONOMOUS MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020  FR 2013413**

(43) Date de publication de la demande:
**25.10.2023  Bulletin 2023/43**

(73) Titulaire: **Ampere SAS**
**92100 Boulogne-Billancourt (FR)**

(72) Inventeurs:
- **ATOUI, Hussam**
  **78084 GUYANCOURT (FR)**
- **MARTINEZ, John-Jairo**
  **38570 Goncelin (FR)**
- **MILANES, Vicente**
  **78084 Guyancourt (FR)**
- **SENAME, Olivier**
  **38100 Grenoble (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**FR-A1- 2 991 279    FR-A1- 3 044 994**
**FR-A1- 3 094 317**

- **KATSUMI HASEGAWA, EIJI KONAKA: "Three look-ahead distance scheme for lateral control of vision-based vehicles", 12 September 2014 (2014-09-12), XP002804049, Retrieved from the Internet <URL:https://ieeexplore.ieee.org/stamp/stamp.jsp?tp=&arnumber=6935214&tag=1%20(in%20time)&tag=1> [retrieved on 20210831]**
- **TAN HAN-SHUE ET AL: "Design of a High-Performance Automatic Steering Controller for Bus Revenue Service Based on How Drivers Steer", IEEE TRANSACTIONS ON ROBOTICS, IEEE SERVICE CENTER, PISCATAWAY, NJ, US, vol. 30, no. 5, 1 October 2014 (2014-10-01), pages 1137 - 1147, XP011560316, ISSN: 1552-3098, [retrieved on 20140930], DOI: 10.1109/TRO.2014.2331092**

# Description

## [Domaine technique

La présente invention concerne une méthode de contrôle pour contrôler le déplacement d'un véhicule automobile autonome, un dispositif de contrôle pour contrôler un tel déplacement, un produit programme d'ordinateur comportant des instructions de programme exploitables par ledit dispositif de contrôle et un véhicule automobile autonome comprenant ledit dispositif de contrôle.

## Technique antérieure

Ces dernières années, les progrès réalisés dans l'équipement des véhicules automobiles en système d'assistance au conducteur ont contribué à une amélioration significative de la sécurité routière. Le défi du futur est de concevoir des véhicules automobiles autonomes. Un véhicule automobile autonome est un véhicule automobile adapté pour rouler sur une route ouverte sans ou avec peu d'intervention d'un conducteur. Le concept vise à développer et à produire un tel véhicule pouvant à terme circuler en toute sécurité sur une voie publique et ceci quel que soit le trafic généré par d'autres véhicules ou des obstacles (humain, animal, arbre...) présents sur la voie. La notion de véhicule automobile autonome couvre ici un véhicule automobile totalement autonome dans lequel l'intervention d'un opérateur humain n'est pas nécessaire pour la conduite dudit véhicule. Cette notion couvre également un véhicule automobile dit « semi-autonome » disposant de systèmes automatisés d'aide à la conduite mais dans lequel l'intervention de l'opérateur humain reste globalement importante.

Le fonctionnement d'un véhicule automobile autonome est généralement régi conjointement par un dispositif de navigation embarqué et par un dispositif de définition d'une trajectoire de référence. Le dispositif de navigation embarqué est conçu pour programmer un itinéraire à grande échelle, c'est-à-dire à l'échelle d'un réseau routier. Cet itinéraire comprend une série de segments de route consécutifs adaptés pour relier une position d'origine à une destination. Cette série de segments de route est éventuellement variable dynamiquement en fonction des conditions de circulation détectées ou des contraintes de déplacement prédéfinies du réseau routier (fermeture de certains tronçons pour travaux en cours, par exemple).

Le dispositif de définition de trajectoire de référence est quant à lui conçu pour traiter automatiquement des trajectoires de déplacement de véhicules à l'échelle locale, de l'ordre de plusieurs dizaines ou centaines de mètres. Ce dispositif de définition de trajectoire de référence est adapté pour mettre en oeuvre l'itinéraire programmé par le système de navigation. Cette mise en œuvre est réalisée en déterminant la position, la direction et la vitesse du véhicule au fil du temps en fonction des contraintes de mouvement, telles que des contraintes dynamiques du véhicule automobile (vitesse maximale, accélération longitudinale, angle de braquage, etc...), des contraintes environnementales (obstacles sur la route, etc...) ou des contraintes d'optimisation (minimisation de l'accélération latérale du véhicule automobile, par exemple).

Dans un contexte de conduite autonome, un véhicule automobile est agencé pour suivre un itinéraire urbain ou extra-urbain prédéfini en parcourant une série de tronçons de route déterminée par le dispositif de navigation embarqué. La trajectoire de référence est définie par un ensemble de coordonnées cartésiennes variables dans le temps et calculées en temps réel en fonction du tronçon de route au niveau duquel l'itinéraire prédéfini est atteint et de paramètres environnementaux. La mise en œuvre de ce calcul peut se faire à l'aide d'un dispositif de reconnaissance de marquages routiers, des moyens de détection radar ou laser, d'un dispositif de reconnaissance d'obstacles, etc. Au cours du roulage, le véhicule automobile suit une trajectoire réelle qui peut être différente de la trajectoire de référence. En effet, au cours de ce roulage, le véhicule automobile subit un certain nombre de contraintes (pression des roues, dénivelé de la route, force du vent, etc) qui peuvent ne pas été intégré par le dispositif de définition de la trajectoire de référence. Dès lors, il peut exister un décalage latéral entre cette trajectoire réelle et la trajectoire de référence qu'il convient de minimiser. Par décalage latéral, on entend une distance non nulle entre la trajectoire réelle et la trajectoire de référence, mesurée sur un axe normal à ladite trajectoire de référence. Il est possible de corriger ce décalage par une commande appropriée d'un système de contrôle latéral en vue de modifier l'angle de direction du véhicule automobile.

Le document US2016107682 divulgue une méthode pour contrôler la direction d'un véhicule automobile autonome. Dans cette méthode un point de la trajectoire de référence est sélectionné par anticipation. Une distance de référence est déterminée, à un instant t, entre le véhicule automobile autonome et le point de la trajectoire de référence sélectionné. La direction du véhicule est alors contrôlée à partir de cette distance de référence.

Bien que la méthode divulguée dans le document US2016107682 améliore le contrôle de la direction du véhicule, elle n'empêche pas des désagréments de confort pour les passagers liés à des phénomènes d'oscillation de la trajectoire réelle autour de la trajectoire de référence, voire même des problèmes d'instabilité. Ces désagréments sont d'autant plus importants à grande vitesse et/ou lorsque des défauts dans le système de contrôle apparaissent (défaillance de capteurs, initialisation de cartes).

Les documents "Three look-ahead distance scheme for lateral control of vision-based vehicles" et "Design of a High-Performance Automatic Steering Controller for Bus Revenue Service Based on How Drivers Steer" décrivent des déterminations des trajectoires pour les véhicules automobiles.

Il existe donc un besoin de proposer une méthode de contrôle pour contrôler la direction d'un véhicule automobile autonome, qui soit simple et pratique à mettre en oeuvre et qui permette d'améliorer la perception de confort par les passagers de ce véhicule autonome.

Le document *"Three look ahead distance scheme for lateral control of vision-based vehicles"* de Katsumi Hasegawa et Eiji Konaka décrit un procédé de contrôle latéral d'un véhicule utilisant l'erreur de la position du véhicule par rapport à une trajectoire de référence mesurée par rapport à trois points de référence situés en amont du véhicule. Cependant, la distance à ces trois points est fixe. Le document « Design of high-performance automatic steering controller for bus revenue service based on how driver steer", de Tan Hua-Shue et al., IEEE transactions on robotics, IEEE service center, Piscataway, NJ, US, Vol. 30 n° 5, décrit un procédé dans lequel un point de référence pris en amont du véhicule est pris pour cible, et le contrôle latéral du véhicule adapté pour rejoindre cette cible.

Exposé de l'invention

La présente invention vise à remédier au moins en partie à ce besoin.

Plus particulièrement, la présente invention vise à améliorer l'expérience des passagers dans un véhicule autonome.

Un premier objet de l'invention concerne une méthode de contrôle pour contrôler le déplacement d'un véhicule automobile autonome selon une trajectoire de référence selon la revendication 1.

Ainsi, l'invention impose au véhicule automobile autonome de maintenir une faible erreur de lacet. Plus particulièrement, la méthode de contrôle va sélectionner, à un instant t, un point idéal dans le polynôme de points de la trajectoire de référence pour minimiser cette erreur de lacet. Plus particulièrement, le procédé va sélectionner une distance de référence entre la position du véhicule et ce point idéal pour minimiser l'erreur de lacet. Dès lors, on limite grandement les risques d'à-coups dans la mise en œuvre du suivi de la trajectoire réel, et ceci quel que soit la vitesse du véhicule automobile autonome ou la présence éventuelle de défaillances dans ledit véhicule. L'expérience des passagers en est alors améliorée.

Dans un mode de réalisation particulier, l'erreur de lacet est maintenue inférieure ou égale audit seuil d'erreur de lacet lorsque qu'une erreur latérale $y_L$ est supérieure à un certain seuil d'erreur latérale, ladite erreur latérale $y_L$ étant déterminée à la distance de référence L à partir de la trajectoire de référence et d'une position du véhicule.

Dans un mode de réalisation particulier, l'erreur de lacet est maintenue inférieure ou égale audit seuil d'erreur de lacet lorsque la vitesse du véhicule autonome est supérieure à une certaine vitesse.

Dans un mode de réalisation particulier, la vitesse de lacet désirée est déterminée selon l'équation :

$$w_{des} = 2 \times \frac{y_L}{L^2} \times v_x$$ , avec $y_L$ l'erreur latérale à la distance de référence L et $v_x$ la vitesse du véhicule automobile autonome.

Selon l'invention, la distance de référence est déterminée selon l'équation : $L = K_{LAS}(\rho) \times \ddot{\delta}$, avec $K_{LAS}$ une fonction de contrôle, avec p un paramètre dépendant de la vitesse $v_x$ du véhicule, de l'erreur latérale $y_L$ et d'une distance de référence L' déterminée à un instant t-1, et avec $\delta°°$ une accélération de braquage.

Dans un mode de réalisation particulier, la méthode de contrôle est adaptée pour contrôler le mouvement latéral du véhicule automobile.

Un autre objet de l'invention concerne un dispositif de contrôle pour contrôler via un actionneur le déplacement d'un véhicule automobile autonome selon une trajectoire de référence selon la revendication 6.

Le dispositif de contrôle est adapté au modèle dynamique du véhicule automobile autonome et à tout type de contrôleur latéral utilisé. Le véhicule automobile autonome s'adapte ainsi automatiquement aux différentes situations auxquelles il doit faire face.

Un autre objet de l'invention concerne un produit programme d'ordinateur comportant des instructions de programme exploitables par le dispositif de contrôle d'un objet précédent, qui lorsqu'elles sont exécutées ou interprétées par ledit dispositif de contrôle déclenchent la mise en œuvre de la méthode de contrôle d'un autre objet précédent dans un véhicule automobile autonome.

La présente invention sera mieux comprise à la lecture de la description détaillée de modes de réalisation pris à titre d'exemples nullement limitatifs et illustrés par les dessins annexés sur lesquels :

La figure 1 est une vue schématique illustrant un véhicule automobile autonome conforme à l'invention ;

La figure 2 illustre un le véhicule automobile autonome de la figure 1 sur une route.

La figure 3 illustre un dispositif de contrôle pour contrôler le déplacement du véhicule automobile autonome des figures 1 et 2 ;

La figure 4 détaille le contenu d'un module optimisateur de référence intelligent du dispositif de contrôle de la figure 3 ;

La figure 5 détaille le module contrôle latérale du dispositif de contrôle de la figure 3 ;

La figure 6 est un schéma illustrant les différentes étapes d'un dispositif de contrôle pour contrôler le déplacement du véhicule automobile des figures 1 et 2 ;

La figure 7 permet de comparer une réponse du véhicule automobile autonome des figures 1 et 2 par rapport à un comportant d'un véhicule de l'art antérieur.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références.

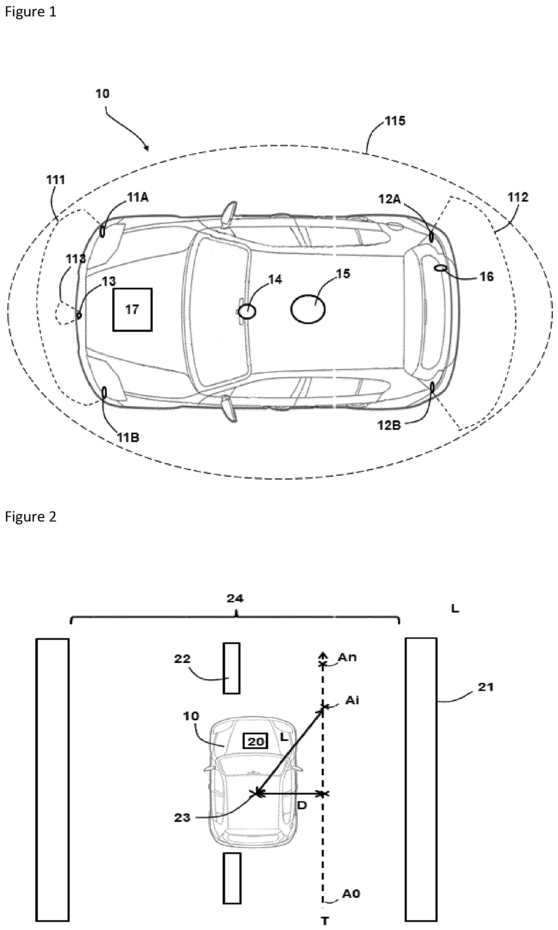

La figure 1 représente schématiquement une vue de dessus d'un véhicule automobile 10 conforme à la présente invention. Ce véhicule automobile 10 comprend une partie avant de véhicule, une partie arrière de véhicule, un toit de véhicule, un intérieur de véhicule, des moyens de direction (non représentés). Le véhicule automobile comprend également un châssis et un ou plusieurs panneaux de carrosserie montés ou fixés sur ledit châssis.

Le véhicule automobile 10 est ici un véhicule autonome. Par véhicule autonome, on entend un véhicule automobile totalement autonome ou semi-autonome. Il existe en effet plusieurs niveaux d'autonomie dans un véhicule automobile.

Dans un premier niveau, dit niveau 1, le véhicule automobile est responsable d'un nombre limité d'opérations de conduite associées audit véhicule automobile. Le conducteur reste alors responsable de la plupart des opérations de contrôle de conduite. Dans le niveau 1, les opérations de commande d'accélération et/ou de freinage (régulateur de vitesse, etc) sont commandées par le véhicule automobile. Ce niveau 1 correspond à un niveau d'assistance à la conduite.

Dans un second niveau, dit niveau 2, le véhicule automobile est adapté pour collecter des informations (par exemple, via un ou plusieurs systèmes d'aide à la conduite, des capteurs, etc) sur l'environnement externe (la route autour du véhicule automobile, la chaussée, le trafic routier, les conditions ambiantes). Dans ce niveau 2, le véhicule autonome est adapté pour utiliser les informations collectées afin de contrôler certaines opérations de conduite (par exemple, la direction, l'accélération, et/ou le freinage). Ce niveau 2 est un niveau d'automatisation partielle du véhicule automobile. Il convient de noter que pour le niveau 1 et le niveau 2, le conducteur doit conserver la pleine surveillance des opérations de conduite effectuées par le véhicule automobile autonome.

Dans un troisième niveau, dit niveau 3, le conducteur délègue toutes les opérations de conduite au véhicule automobile sauf lorsque ledit véhicule automobile demande au conducteur d'agir ou d'intervenir pour contrôler une ou plusieurs de ces opérations de conduite. Ce niveau 3 est un niveau d'automatisation conditionnelle.

Dans un quatrième niveau, dit niveau 4, le conducteur ne gère plus aucune opération de conduite. C'est le véhicule automobile qui contrôle alors l'ensemble de des opérations de conduite, y compris lorsque le conducteur ne répond pas à une demande d'intervention. Le niveau 4 est un niveau d'automatisation élevée.

Dans un cinquième niveau, dit niveau 5, le véhicule automobile contrôle toutes les opérations de conduite. Le véhicule automobile surveille ainsi au cours du roulage le trafic routier, les acteurs mobiles sur la route (êtres humains, animaux), les obstacles immobiles sur la route, la chaussée. A ce niveau 5, aucune interaction avec un conducteur humain n'est requise. Le niveau 5 est le niveau d'automatisation complète. Il convient de noter que pour les niveaux 3 à 5, le véhicule automobile est adapté pour surveiller les opérations de conduite ainsi que pour surveiller l'environnement externe audit véhicule automobile.

Pour pouvoir réaliser les différentes opérations de conduite dans ces différents niveaux d'autonomie, le véhicule automobile 10 comprend un certain nombre de capteurs tels que :

- un radar avant 11A, 11B ;

- un radar arrière 12A, 12B;

- un capteur ultrasons 13 ;

- une caméra vidéo 14 ;

- un LIDAR 15;

- une antenne GPS 16.

Le radar avant comprend deux éléments de radar avant 11A, 11B disposés sur la partie avant de véhicule de part et d'autre d'un axe de symétrie dudit véhicule automobile 10. Le radar avant possède une zone de détection 111 à l'avant du véhicule automobile. Il est ainsi adapté pour détecter les positions des objets environnants. Il permet de mesurer la vitesse du véhicule automobile. Les informations recueillies par le radar avant 11A, 11B sont particulièrement utiles pour mettre en œuvre certaines opérations de conduite telles que le freinage d'urgence ou l'anti-franchissement de bandes centrales.

Le radar arrière comprend deux éléments de radar arrière 12A, 12B disposés sur la partie arrière de véhicule de part et d'autre de l'axe de symétrie dudit véhicule automobile 10. Le radar arrière possède une zone de détection 112 à l'arrière du véhicule automobile. Il est ainsi adapté pour détecter les positions des objets environnants. Il permet de mesurer la vitesse des autres véhicules automobiles qui suivent ledit véhicule automobile 10. Les informations recueillies par le radar arrière 12A, 12B sont particulièrement utiles pour mettre en œuvre certaines opérations de conduite telles que le freinage d'urgence ou l'anti-franchissement de bandes centrales.

Le capteur ultrasons 13 est disposé sur la partie avant du véhicule entre les deux éléments de radar avant 11A, 11B. Le capteur ultrasons 13 possède une zone de détection 113 beaucoup plus faible que la zone de détection 111 du radar avant 11A, 11B. Ce capteur à ultrasons 13 est ainsi adapté pour détecter des obstacles très proches. Les informations recueillies sont particulièrement utiles pour mettre en œuvre des opérations de conduite telles que le maintien d'un écart de sécurité avec un autre véhicule automobile précédent directement ledit véhicule automobile 10.

La caméra vidéo 14 est située ici derrière le rétroviseur. Les informations recueillies par cette caméra vidéo 14 sont particulièrement utiles pour la mise en œuvre de certaines opérations de conduite telles que le déchiffrage des panneaux de signalisation, le repérage des bordures et des bandes centrales, la détection d'acteurs mobiles sur la route (êtres humains, animaux).

Le LIDAR 15 (pour « LIght Detection And Ranging » en anglais) est un capteur situé ici sur le toit du véhicule automobile 10. Il permet d'effectuer des mesures de télédétection par laser. La télédétection par laser est une technique de mesure à distance fondée sur l'analyse des propriétés d'un faisceau de lumière renvoyé vers son émetteur. Le LIDAR possède une zone de détection 115 assez large, par exemple de l'ordre de 50 mètres de diamètre. Il permet de scanner en permanence l'environnement à 360° pour en faire une cartographie en 3D. Les informations recueillies par le LIDAR 15 sont utiles pour la mise en œuvre de certaines opérations de conduite telles que la détection d'obstacles, y compris la nuit.

L'antenne GPS 16 est située sur la partie arrière du véhicule automobile 10. Elle permet de recevoir des signaux GPS (pour « Global Positioning System » en anglais). Les données de navigation peuvent alors être mises à jour dans le véhicule automobile 10 à partir de ces signaux GPS.

Le véhicule automobile comprend également un ordinateur central 17 adapté pour traiter les différentes données des capteurs 11A, 11B, 12A, 12B, 13, 14, 15. L'ordinateur central 17 et les capteurs 11A, 11B, 12A, 12B, 13, 14, 15 sont reliés dans le véhicule automobile par un ou plusieurs réseaux (non représentés) de type bus CAN (pour « Controller Area Network » en anglais) pour le transport desdites données des capteurs.

La figure 2 illustre le véhicule automobile autonome 10 de la figure 1 sur une route 20. Ce véhicule automobile autonome 10 comprend un centre de gravité 23. Afin de simplifier la figure 22, les capteurs 11A, 11B, 12A, 12B, 13, 14, 15, 16 n'ont pas été représentés sur la figure 2. La route 24 est délimitée par deux bordures 21. Elle est de plus divisée en deux voies séparées par une pluralité de bandes centrales 22. Sur la figure 2, le véhicule roule sur la voie de droite en suivant une trajectoire réelle. Cette trajectoire réelle est ici décalée d'un décalage latéral D entre un centre de gravité et la trajectoire de référence T. Cette trajectoire de référence a été préalablement calculée par le système de navigation du véhicule automobile 10, notamment à partir des données des signaux GPS reçues par l'antenne GPS 16. Cette trajectoire de référence T s'étend ici à mi-distance entre la bordure 21 et les bandes centrales 22. Elle est formée par une pluralité de points A0,..., Ai,...An.

L'invention a pour but de minimiser le décalage latéral D. Pour cela, le véhicule automobile 10 comprend un dispositif de contrôle 20 qui va sélectionner un point idéal Ai de l'ensemble des points formant la trajectoire de référence T. Ce point idéal Ai va constituer un point d'anticipation. Une distance de référence L est alors déterminée entre le centre de gravité 23 et le point d'anticipation Ai. En fonction des contraintes externes autour du véhicule autonome, par exemple des contraintes environnementales ou des contraintes de trafic, le dispositif de contrôle 20 va sélectionner un point d'anticipation Ai plus ou moins loin par rapport au centre de gravité 23. Ainsi, si l'environnement extérieur est simple et le trafic est peu important, le dispositif de contrôle va sélectionner un point d'anticipation éloigné par rapport au centre de gravité 23. La distance de référence L sera donc importante. Cela va permettre de corriger le décalage latéral pour faire venir le véhicule automobile autonome sur la trajectoire de référence T en douceur en limitant les à-coups. Au contraire, si l'environnement extérieur est compliqué (par temps de pluie, ...) et/ou que le trafic est encombré, le dispositif de contrôle va sélectionner un point d'anticipation proche par rapport au centre de gravité 23 pour forcer un retour rapide du véhicule automobile autonome vers la trajectoire de référence T. Ce dispositif de contrôle 20 est dans un mode de réalisation préférentiel intégré directement dans l'ordinateur central 17 du véhicule automobile de la figure 1. Ainsi, le dispositif de contrôle 20, dans un mode de réalisation préférentiel, permet de contrôler le mouvement latéral du véhicule automobile autonome 10.

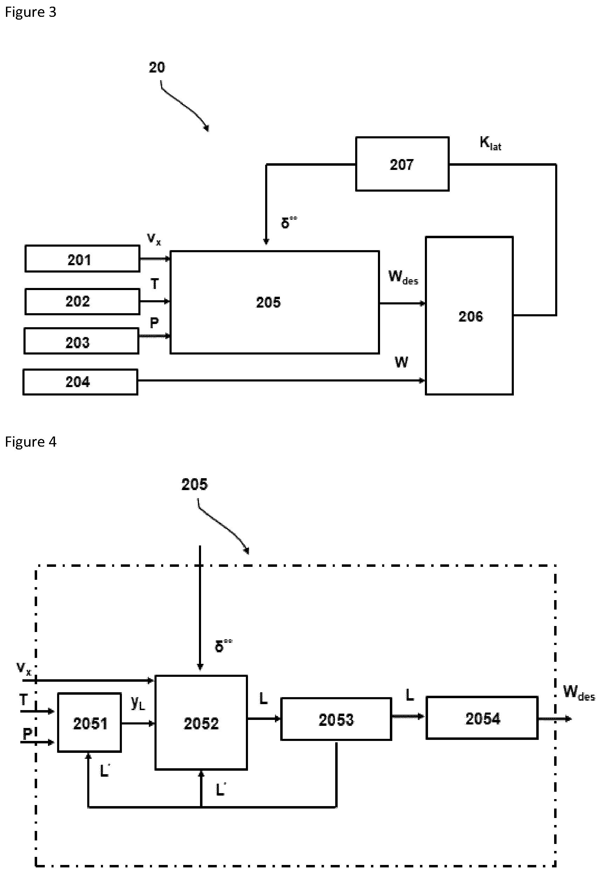

La figure 3 illustre un dispositif de contrôle 20 pour contrôler le déplacement du véhicule automobile autonome 10.

Le dispositif de contrôle 20 comprend :

- un bloc vitesse 201 ;

- un bloc trajectoire de référence 202 ;

- un bloc position du véhicule 203 ;

- un bloc vitesse de lacet 204 ;

- un module optimisateur de référence intelligent 205 ;

- un module contrôle latéral 206 ;

- un bloc accélération de braquage 207.

Le bloc vitesse 201 est adapté pour mesurer la vitesse $v_x$ du véhicule automobile 10.

Le bloc trajectoire de référence 202 est adapté pour stocker les données de la trajectoire T de référence du véhicule automobile 10.

Le bloc position du véhicule 203 est adapté pour déterminer la position du véhicule P à tout instant t.

Le bloc vitesse de lacet 204 est adapté pour déterminer une vitesse de lacet réelle W du véhicule automobile.

Le module optimisateur de référence intelligent 205 est adapté pour déterminer une vitesse de lacet désirée $W_{des}$ à partir de la vitesse $v_x$, des données de la trajectoire de référence T, de la position P du véhicule et d'une accélération de braquage $\delta°°$.

Le module contrôle latérale 206 est adapté pour fournir une commande $K_{lat}$ de contrôle latéral à partir de la vitesse de lacet désirée $W_{des}$ et de la vitesse de lacet réelle W.

Le bloc accélération de braquage 207 est adapté pour fournir l'accélération de braquage $\delta°°$ à partir de la commande $K_{lat}$ de contrôle latéral.

La figure 4 détaille le contenu du module optimisateur de référence intelligent 205. Ce module 205 comprend :

- un bloc erreur latéral 2051 ;

- un bloc fonction de contrôle 2052 ;

- un bloc distance de référence 2053 ;

- un bloc vitesse de lacet désirée 2054.

Le bloc erreur latéral 2051 est adapté pour recevoir la trajectoire T de référence, la position P du véhicule ainsi qu'une distance de référence L' déterminée à un instant t-1. Ce bloc erreur latéral 2051 délivre une erreur latérale $y_L$.

Le bloc fonction de contrôle 2052 est adapté pour recevoir la vitesse $v_x$ du véhicule 10, l'erreur latérale $y_L$, la distance de référence L' et l'accélération de braquage $\delta°°$. Ce bloc 2052 comprend une fonction latérale $K_{LAS}$ adaptée pour délivrer une distance de référence L déterminée à l'instant t.

Le bloc distance de référence 2053 est adapté pour recevoir la distance de référence L déterminée à l'instant t. Ce bloc 2053 délivre cette distance de référence L au bloc vitesse de lacet désirée 2054. Le bloc 2053 délivre également la distance de référence L' déterminée à l'instant t-1 au bloc erreur latéral 2051 ainsi qu'au bloc fonction de contrôle 2052.

Le bloc vitesse de lacet désirée 2054 reçoit la distance de référence L déterminée à l'instant t. Il délivre en sortie la vitesse de lacet désirée $W_{des}$.

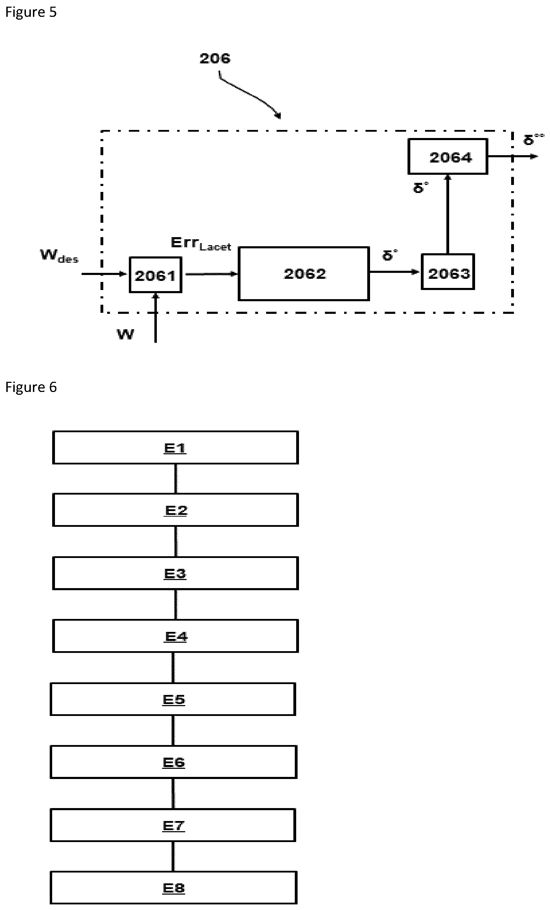

La figure 5 détaille le module contrôle latérale 206. Ce module 206 comprend :

- un bloc erreur lacet 2061 ;

- un bloc contrôle latérale 2062 ;

- un bloc vitesse de braquage 2063 ;

- un bloc dérivateur 2064.

Le bloc erreur lacet 2061 est adapté pour comparer la vitesse de lacet désirée $W_{des}$ à la vitesse de lacet réelle W. Ce bloc de lacet 2061 fournit une erreur de lacet $Err_{Lacet}$. Dans l'invention, cette erreur de lacet $Err_{Lacet}$ est inférieure ou égale à un seuil d'erreur de lacet S1 prédéterminé. Préférentiellement, ce seuil d'erreur de lacet S1 correspond à 10% de la vitesse de lacet désirée $W_{des}$.

Le bloc contrôle latéral 2062 est adapté pour recevoir l'erreur de lacet $Err_{Lacet}$ et pour déterminer une vitesse de braquage $\delta°$.

Le bloc vitesse de braquage 2063 est adapté pour recevoir la vitesse de braquage $\delta°$ et pour fournir cette vitesse de braquage au bloc dérivateur 2064.

La méthode de contrôle pour contrôler le déplacement du véhicule automobile autonome 10 est décrite par la suite à l'appui des figures 1 à 5 et de la figure 6.

Sur la figure 6, dans une étape E1 de détermination, des données d'entrée concernant la vitesse $v_x$ du véhicule 10, la trajectoire T de référence, ainsi que la position P du véhicule sont déterminées.

Dans une étape E2, le bloc 2051 du module 205 détermine une erreur latérale $y_L$ à partir de la trajectoire T de référence, de la position P du véhicule ainsi que de la distance de référence L' déterminée à l'instant t-1.

Dans une étape E3, le bloc 2052 du module 205 détermine une distance de référence L à l'instant t à partir de la vitesse $v_x$ du véhicule 10, de l'erreur latérale $y_L$, la distance de référence L' déterminée à l'instant t-1 et de l'accélération de braquage $\delta°°$. Dans un mode de réalisation préférentiel, on a l'équation :

$L = K_{LAS}(\rho) \times \ddot{\delta}$, avec, pour rappel, $K_{LAS}$ la fonction de contrôle, avec $\rho$ un paramètre dépendant de la vitesse $v_x$ du véhicule, de l'erreur latérale $y_L$ et de la distance de référence L' déterminée à l'instant t-1, et avec $\delta°°$ l'accélération de braquage.

Dans une étape E4, le bloc 2053 du module 205 transmet la distance de référence L' aux blocs 2051 et 2052. Dans cette étape E4, le bloc 2053 transmet également la distance de référence L déterminée à l'instant t.

Dans une étape E5, le bloc 2054 détermine la vitesse de lacet désirée $W_{des}$. Cette vitesse de lacet désirée $W_{des}$ est fonction de la distance de référence L entre le véhicule et la trajectoire de référence à l'instant t. Dans un mode de réalisation particulier, la vitesse de lacet désirée $W_{des}$ est déterminée selon l'équation :

$w_{des} = 2 \times \frac{y_L}{L^2} \times v_x$ , avec, pour rappel, $y_L$ l'erreur latérale à la distance de référence L et $v_x$ la vitesse du véhicule automobile autonome.

Dans une étape E6, le bloc 2061 du module 206 détermine une erreur de lacet $Err_{lacet}$. Cette erreur de lacet $Err_{lacet}$ correspond à la comparaison de la vitesse de lacet désirée $W_{des}$ avec la vitesse de lacet réelle W du véhicule automobile.

Dans une étape E7, le bloc 2062 du module 206 détermine une vitesse de braquage $\delta°$ à partir de l'erreur de lacet $Err_{lacet}$.

Dans une étape E8, le bloc 2064 du module 206 détermine et transmet une accélération de braquage $\delta°°$ à un actionneur adapté pour contrôler le véhicule automobile autonome. Cette accélération de braquage est donc déterminée à partir de l'erreur de lacet $Err_{Lacet}$ via les étapes E7 et E8. L'actionneur est, par exemple, une colonne de direction du véhicule automobile autonome.

On notera que l'erreur de lacet est maintenue inférieure ou égale au seuil d'erreur de lacet S1 lorsque l'erreur latérale est supérieure à un certain seuil d'erreur latérale S2.

**Dans un mode** de réalisation alternatif, l'erreur de lacet est maintenue inférieure ou égale au seuil d'erreur de lacet S1 lorsque la vitesse $v_x$ du véhicule autonome est supérieure à une certaine vitesse, par exemple à une vitesse de 80 Km/h.

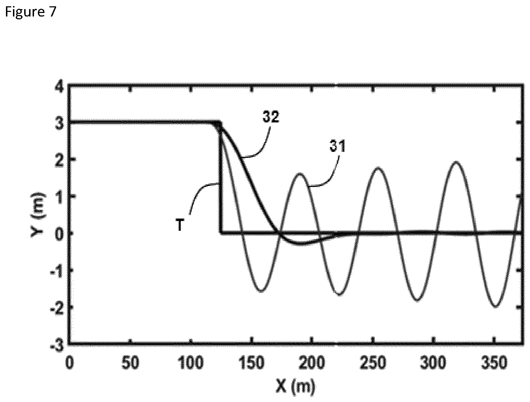

Le procédé de contrôle et le dispositif de contrôle 20 associés ont été validés sur le circuit d'essai de Satory dans une partie mixte comportant des lignes droites et des courbes. La figure 7 permet une comparaison entre une première trajectoire 31 et une seconde trajectoire 32 au cours d'un changement brusque de trajectoire de référence T. La première trajectoire 31 représente une réponse d'un véhicule autonome selon l'art antérieur. Cette réponse oscille autour de la trajectoire de référence. La seconde trajectoire 32 représente la réponse du véhicule automobile autonome 10 selon l'invention. Cette réponse présente une oscillation bien moins grande. La trajectoire réelle du véhicule autonome « colle » ainsi beaucoup plus rapidement à la trajectoire de référence T.

La méthode de contrôle pour contrôler le déplacement d'un véhicule automobile autonome et le dispositif de contrôle 20 associé permettent ainsi :

- de trouver le point d'anticipation optimal dans la trajectoire de référence pour alimenter le contrôleur latéral ;

- d'avoir un dispositif de contrôle pouvant être appliqué à toute manoeuvre latérale autonome (changement de voie, changement dynamique, manoeuvre de stationnement, ...) ;

- d'avoir un dispositif de contrôle compatible avec tout système de navigation de trajectoire et pouvant être connecté à tout contrôleur latéral ADAS/AD ;

- d'avoir une conduite de type humain d'un véhicule autonome dans des situations critiques où les trajectoire souhaitées peuvent être soit incohérentes, soit impossibles à réaliser compte tenu des capacités du véhicule ;

- d'avoir une conduite souple du véhicule en cas de bruits importants ou d'erreurs causées par les capteurs ou l'état de la route ;

- d'avoir un dispositif de contrôle pouvant être également utilisé pour démarrer un mode autonome en cas d'erreurs latérales initiales importantes ;

- d'avoir un dispositif de contrôle permettant de vérifier l'accélération de braquage souhaité en fonction de l'état et des capacités de l'actionneur.

L'invention concerne également un produit programme d'ordinateur comportant des instructions de programme exploitables par le dispositif de contrôle 20, qui lorsqu'elles sont exécutées ou interprétées par ledit dispositif de contrôle 20 déclenchent la mise en œuvre de la méthode de contrôle telle que décrite à la figure 5.

L'invention concerne également un véhicule automobile autonome 10 comprenant le dispositif de contrôle 20. Ce véhicule automobile autonome est un véhicule de tourisme, comme il est représenté sur la figure 1 et sur la figure 2. En variante, le véhicule automobile est un tout autre véhicule tel qu'un bus ou un camion.

L'invention n'est pas limitée aux modes de réalisation et variantes présentées et d'autres modes de réalisation et variantes apparaîtront clairement à l'homme du métier.

**Revendications**

1. Méthode de contrôle pour contrôler le déplacement d'un véhicule automobile autonome (10) selon une trajectoire de référence (T), ladite méthode étant **caractérisée en ce qu'**elle comprend :

    - une étape de détermination d'une distance de référence L entre le véhicule et un point (Ai) situé sur la trajectoire de référence (T) à un instant t, ladite distance de référence L étant sélectionnée de sorte que l'erreur de lacet soit inférieure ou égale à un seuil d'erreur de lacet (S1) prédéterminé et déterminée selon l'équation $L = K_{LAS}(\rho) \times \ddot{\delta}$, avec

        • $K_{LAS}$ une fonction de contrôle,
        • $\rho$ un paramètre dépendant de la vitesse $v_x$ du véhicule, d'une distance de référence L' déterminée à un instant t-1 et d'une l'erreur latérale $y_L$ entre le véhicule et la trajectoire de référence (T) à la distance L', et

- $\delta°°$ une accélération de braquage

- une étape de détermination (E5) d'une vitesse de lacet désirée ($W_{des}$) du véhicule automobile autonome, ladite vitesse de lacet désirée ($W_{des}$) étant fonction de la distance de référence (L);
- une étape de détermination (E6) d'une erreur de lacet ($Err_{lacet}$) correspondant à une comparaison de la vitesse de lacet désirée ($W_{des}$) avec une vitesse de lacet réelle (W) du véhicule automobile autonome ;
- une étape de transmission (E7) d'une accélération de braquage ($\delta°°$) à un actionneur adapté pour contrôler le véhicule automobile autonome, ladite accélération de braquage étant déterminée à partir de l'erreur de lacet ($Err_{Lacel}$).

2. Méthode de contrôle selon la revendication 1, dans laquelle l'erreur de lacet ($Err_{lacet}$) est maintenue inférieure ou égale audit seuil d'erreur de lacet (S1) lorsque qu'une erreur latérale ($y_L$) est supérieure à un certain seuil d'erreur latérale (S2), ladite erreur latérale ($y_L$) étant déterminée à la distance de référence (L) à partir de la trajectoire de référence (T) et d'une position (P) du véhicule (10).

3. Méthode de contrôle selon l'une quelconque des revendications 1 ou 2, dans laquelle l'erreur de lacet ($Err_{lacet}$) est maintenue inférieure ou égale audit seuil d'erreur de lacet (S1) lorsque la vitesse ($v_x$) du véhicule autonome est supérieure à un à certaine vitesse.

4. Méthode de contrôle selon l'une quelconque des revendications 1 à 3, dans laquelle la vitesse de lacet désirée ($W_{des}$) est déterminée selon l'équation :

$$w_{des} = 2 \times \frac{y_L}{L^2} \times v_x$$, avec $y_L$ l'erreur latérale à la distance de référence L et $v_x$ la vitesse du véhicule automobile autonome.

5. Méthode de contrôle selon l'une quelconque des revendications 1 à 5, dans laquelle ladite méthode de contrôle est adaptée pour contrôler le mouvement latéral du véhicule automobile autonome.

6. Dispositif de contrôle pour contrôler via un actionneur le déplacement d'un véhicule automobile autonome selon une trajectoire de référence, ledit dispositif de contrôle comprenant :

- un contrôleur latéral (206) adapté pour fournir une accélération de braquage ($\delta°°$) audit actionneur, ladite accélération de braquage ($\delta°°$) étant déterminée à partir d'une erreur de lacet ($Err_{lacet}$) correspondant à une comparaison entre une vitesse de lacet désirée ($W_{des}$) et une vitesse de lacet réelle (W) dudit véhicule automobile autonome (10) ;
- un optimiseur de référence intelligent (205) adapté pour fournir la vitesse de lacet désirée ($W_{des}$) au contrôleur, ladite vitesse de lacet désirée ($W_{des}$) étant fonction d'une distance de référence (L) entre ledit véhicule automobile autonome et un point (Ai) situé sur ladite trajectoire de référence à un instant t, ladite distance de référence L étant déterminée selon l'équation $L = K_{LAS}(\rho) \times \ddot{\delta}$, avec

- $K_{LAS}$ une fonction de contrôle,
- $\rho$ un paramètre dépendant de la vitesse $v_x$ du véhicule, d'une distance de référence L' déterminée à un instant t-1 et d'une l'erreur latérale $y_L$ entre le véhicule et la trajectoire de référence (T) à la distance L',

ladite distance de référence (L) étant sélectionnée de sorte que l'erreur de lacet ($Err_{lacet}$) est inférieure ou égale à un seuil d'erreur de lacet (S1) prédéterminé.

7. Produit programme d'ordinateur comportant des instructions de programme exploitables par un dispositif de contrôle (20) de la revendication 6, qui lorsqu'elles sont exécutées ou interprétées par ledit dispositif de contrôle (20) déclenchent la mise en oeuvre de la méthode de contrôle selon l'une quelconque des revendications 1 à 5 dans un véhicule automobile autonome (10).

8. Véhicule automobile autonome comportant un dispositif de contrôle (20) selon la revendication 6.

**Patentansprüche**

1. Steuerungsverfahren zur Steuerung der Bewegung eines autonomen Kraftfahrzeugs (10) gemäß einer Referenzbahn (T), wobei das Verfahren **dadurch gekennzeichnet ist, dass** es Folgendes beinhaltet:

- einen Schritt des Bestimmens eines Referenzabstands L zwischen dem Fahrzeug und einem Punkt (Ai), der sich auf der Referenzbahn (T) befindet, zu einem Zeitpunkt t, wobei der Referenzabstand L so ausgewählt wird, dass der Gierfehler kleiner als oder gleich einer vorbestimmten Gierfehlerschwelle (S1) ist, und gemäß der Gleichung $L = K_{LAS}(\rho) \times \ddot{\delta}$ bestimmt wird, wobei

- $K_{LAS}$ eine Steuerfunktion ist,
- $\rho$ ein Parameter ist, der von der Geschwindigkeit $v_x$ des Fahrzeugs, von einem Referenzabstand L', der zu einem Zeitpunkt t-1 bestimmt wird, und von einem seitlichen Fehler $y_L$ zwischen dem Fahrzeug und der Referenzbahn (T) bei dem Abstand L' abhängt, und

• $\delta°°$ eine Lenkwinkelbeschleunigung ist,

- einen Schritt des Bestimmens (E5) einer gewünschten Giergeschwindigkeit ($W_{des}$) des autonomen Kraftfahrzeugs, wobei die gewünschte Giergeschwindigkeit ($W_{des}$) von dem Referenzabstand (L) abhängig ist;
- einen Schritt des Bestimmens (E6) eines Gierfehlers ($Err_{Gier}$), der einem Vergleich zwischen der gewünschten Giergeschwindigkeit ($W_{des}$) und einer tatsächlichen Giergeschwindigkeit (W) des autonomen Kraftfahrzeugs entspricht;
- einen Schritt des Übertragens (E7) einer Lenkwinkelbeschleunigung ($\delta°°$) an ein Betätigungselement, das dazu angepasst ist, das autonome Kraftfahrzeug zu steuern, wobei die Lenkwinkelbeschleunigung anhand des Gierfehlers ($Err_{Gier}$) bestimmt wird.

2. Steuerungsverfahren nach Anspruch 1, wobei der Gierfehler ($Err_{Gier}$) kleiner als oder gleich der Gierfehlerschwelle (S1) gehalten wird, wenn ein seitlicher Fehler ($y_L$) größer als eine gewisse seitliche Fehlerschwelle (S2) ist, wobei der seitliche Fehler ($y_L$) bei dem Referenzabstand (L) anhand der Referenzbahn (T) und einer Position (P) des Fahrzeugs (10) bestimmt wird.

3. Steuerungsverfahren nach einem der Ansprüche 1 oder 2, wobei der Gierfehler ($Err_{Gier}$) kleiner als oder gleich der Gierfehlerschwelle (S1) gehalten wird, wenn die Geschwindigkeit ($v_x$) des autonomen Fahrzeugs größer als eine gewisse Geschwindigkeit ist.

4. Steuerungsverfahren nach einem der Ansprüche 1 bis 3, wobei die gewünschte Giergeschwindigkeit ($W_{des}$) gemäß der folgenden Gleichung bestimmt wird:

$$w_{des} = 2 \times \frac{y_L}{L^2} \times v_x$$ , wobei $y_L$ der seitliche Fehler bei dem Referenzabstand L ist und $v_x$ die Geschwindigkeit des autonomen Kraftfahrzeugs ist.

5. Steuerungsverfahren nach einem der Ansprüche 1 bis 5, wobei das Steuerungsverfahren dazu angepasst ist, die seitliche Bewegung des autonomen Kraftfahrzeugs zu steuern.

6. Steuerungsvorrichtung zur Steuerung, mittels eines Betätigungselements, der Bewegung eines autonomen Kraftfahrzeugs gemäß einer Referenzbahn, wobei die Steuerungsvorrichtung Folgendes beinhaltet:

- ein Element zur seitlichen Steuerung (206), das dazu angepasst ist, dem Betätigungselement eine Lenkwinkelbeschleunigung ($\delta°°$) bereitzustellen, wobei die Lenkwinkelbeschleunigung ($\delta°°$) anhand eines Gierfehlers ($Err_{Gier}$) bestimmt wird, der einem Vergleich zwischen einer gewünschten Giergeschwindigkeit ($W_{des}$) und einer tatsächlichen Giergeschwindigkeit (W) des autonomen Kraftfahrzeugs (10) entspricht;

- einen intelligenten Referenzoptimierer (205), der dazu angepasst ist, dem Steuerungselement die gewünschte Giergeschwindigkeit ($W_{des}$) bereitzustellen, wobei die gewünschte Giergeschwindigkeit ($W_{des}$) von einem Referenzabstand (L) zwischen dem autonomen Kraftfahrzeug und einem Punkt (Ai), der sich auf der Referenzbahn befindet, zu einem Zeitpunkt t abhängig ist, wobei der Referenzabstand L gemäß der Gleichung $L = K_{LAS}(\rho) \times \delta$ bestimmt wird, wobei

• $K_{LAS}$ eine Steuerfunktion ist,
• $\rho$ ein Parameter ist, der von der Geschwindigkeit $v_x$ des Fahrzeugs, von einem Referenzabstand L', der zu einem Zeitpunkt t-1 bestimmt wird, und von einem seitlichen Fehler $y_L$ zwischen dem Fahrzeug und der Referenzbahn (T) bei dem Abstand L' abhängt,

wobei der Referenzabstand (L) so ausgewählt wird, dass der Gierfehler ($Err_{Gier}$) kleiner als oder gleich einer vorbestimmten Gierfehlerschwelle (S1) ist.

7. Computerprogrammprodukt, das durch eine Steuerungsvorrichtung (20) nach Anspruch 6 verarbeitbare Programmanweisungen umfasst, die, wenn sie von der Steuerungsvorrichtung (20) ausgeführt oder interpretiert werden, die Umsetzung des Steuerungsverfahrens nach einem der Ansprüche 1 bis 5 in einem autonomen Kraftfahrzeug (10) auslösen.

8. Autonomes Kraftfahrzeug, das eine Steuerungsvorrichtung (20) nach Anspruch 6 umfasst.

**Claims**

1. Control method for controlling the movement of an autonomous motor vehicle (10) along a reference trajectory (T), said method being **characterized in that** it comprises:

- a step of determining a reference distance L between the vehicle and a point (Ai) situated on the reference trajectory (T) at an instant t, said reference distance L being selected such that the yaw error is less than or equal to a predetermined yaw error threshold (S1) and determined according to the equation $L = K_{LAS}(\rho) \times \ddot{\delta}$, where

- $K_{LAS}$ is a control function,
- $\rho$ is a parameter dependent on the speed $v_x$ of the vehicle, on a reference distance L' determined at an instant t-1 and on the lateral error $y_L$ between the vehicle and the reference trajectory (T) at the distance L', and
- $\delta^{\circ\circ}$ is a steering wheel angular acceleration

- a step (E5) of determining a desired yaw rate ($W_{des}$) of the autonomous motor vehicle, said desired yaw rate ($W_{des}$) being a function of the reference distance (L);
- a step (E6) of determining a yaw error ($Err_{yaw}$) corresponding to a comparison of the desired yaw rate ($W_{des}$) with an actual yaw rate (W) of the autonomous motor vehicle;
- a step (E7) of transmitting a steering wheel angular acceleration ($\delta^{\circ\circ}$) to an actuator suitable for controlling the autonomous motor vehicle, said steering wheel angular acceleration being determined from the yaw error ($Err_{yaw}$).

2. Control method according to Claim 1, wherein the yaw error ($Err_{yaw}$) is maintained less than or equal to said yaw error threshold (S1) when a lateral error ($y_L$) is above a certain lateral error threshold (S2), said lateral error ($y_L$) being determined at the reference distance (L) from the reference trajectory (T) and from a position (P) of the vehicle (10).

3. Control method according to any one of Claims 1 or 2, wherein the yaw error ($Err_{yaw}$) is maintained less than or equal to said yaw error threshold (S1) when the speed ($v_x$) of the autonomous vehicle is greater than a certain speed.

4. Control method according to any one of Claims 1 to 3, wherein the desired yaw rate ($W_{des}$) is determined according to the equation:

$$w_{des} = 2 \times \frac{y_L}{L^2} \times v_x$$ , where $y_L$ is the lateral error at the reference distance L and $v_x$ is the speed of the autonomous motor vehicle.

5. Control method according to any one of Claims 1 to 5, wherein said control method is adapted to control the lateral movement of the autonomous motor vehicle.

6. Control device for controlling, via an actuator, the movement of an autonomous motor vehicle along a reference trajectory, said control device comprising:

- a lateral controller (206) suitable for providing a steering wheel angular acceleration ($\delta^{\circ\circ}$) to said actuator, said steering wheel angular acceleration ($\delta^{\circ\circ}$) being determined from a yaw error ($Err_{yaw}$) corresponding to a comparison between a desired yaw rate ($W_{des}$) and an actual yaw rate (W) of said autonomous motor vehicle (10);
- a smart reference optimizer (205) suitable for supplying the desired yaw rate ($W_{des}$) to the controller, said desired yaw rate ($W_{des}$) being a function of a reference distance (L) between said autonomous motor vehicle and a point (Ai) situated on said reference trajectory at a time t, said reference distance L being determined according to the equation $L = K_{LAS}(\rho) \times \ddot{\delta}$, where

- $K_{LAS}$ is a control function,
- $\rho$ is a parameter dependent on the speed $v_x$ of the vehicle, on a reference distance L' determined at an instant t-1 and on the lateral error $y_L$ between the vehicle and the reference trajectory (T) at the distance L',

said reference distance (L) being selected such that the yaw error ($Err_{yaw}$) is less than or equal to a predetermined yaw error threshold (S1).

7. Computer program product comprising program instructions which may be implemented by a control device (20) of Claim 6 and which, when they are executed or interpreted by said control device (20), trigger the implementation of the control method according to any one of Claims 1 to 5 in an autonomous motor vehicle (10).

8. Autonomous motor vehicle comprising a control device (20) according to Claim 6.

Figure 1

Figure 2

Figure 3

Figure 4

Figure 5

206

$$W_{des} \rightarrow \boxed{2061} \xrightarrow{Err_{Lacet}} \boxed{2062} \xrightarrow{\delta^{\circ}} \boxed{2063}$$

$$\boxed{2064} \rightarrow \delta^{\circ\circ}$$

W

Figure 6

$$\boxed{\underline{E1}}$$

$$\boxed{\underline{E2}}$$

$$\boxed{\underline{E3}}$$

$$\boxed{\underline{E4}}$$

$$\boxed{\underline{E5}}$$

$$\boxed{\underline{E6}}$$

$$\boxed{\underline{E7}}$$

$$\boxed{\underline{E8}}$$

Figure 7

## RÉFÉRENCES CITÉES DANS LA DESCRIPTION

**Documents brevets cités dans la description**

- US 2016107682 A

**Littérature non-brevet citée dans la description**

- Design of high-performance automatic steering controller for bus revenue service based on how driver steer. **DE TAN HUA-SHUE et al.** IEEE transactions on robotics. IEEE service center, vol. 30